# EUROPEAN PATENT SPECIFICATION

(11) **EP 0 285 612 B1**
(45) Date of publication and mention of the grant of the patent: **28.07.1993**
(21) Application number: 87903442.9
(22) Date of filing: 28.04.1987
(51) Int. Cl.: B01D 53/26, B01D 46/24, F04B 39/16

(54) **MOISTURE REMOVER IN COMPRESSED AIR SYSTEM**
FEUCHTIGKEITSBESEITIGER IN VERDICHTETEM LUFTSYSTEM
DISPOSITIF D'ELIMINATION DE L'HUMIDITE DANS UN SYSTEME A AIR COMPRIME

(30) Priority: 13.10.1986 KR 8615606
(43) Date of publication of application: 12.10.1988
(73) Proprietor: SUNG, Ki Jang, Seoul 135-010 (KR)
(72) Inventor: SUNG, Ki Jang, Seoul 135-010 (KR)
(74) Representative: Burford, Anthony Frederick
(86) International application number: KR8700005
(87) International publication number: WO8802658

(56) References cited:
- DE-B- 1 148 691
- US-A- 2 629 458
- US-A- 3 261 146
- Patent Abstracts of Japan, unexamined applications, section C, vol. 8, no. 279, 20 December 1984; C 50257 The Patent Office Japanese Government JP-A-59-147 621, Hisamoto Suzuki "Dehumidification apparatus for compressed air" 24 August 1984, Derwent Publications, London, GB

## Description

This invention relates to a moisture remover, which is to be installed in a compressed air line of various air machinery and tools for industry, enabling an effective removal of the moisture from the compressed air by cooling the moisture which is produced by lowering the pressure of the compressed air.

The compressed air produced from a compressor has such contaminants as water, oxidized oil, carbon and the like. They have caused an extreme lowering of efficiency of air machinery and tools or oxidization of the parts thereof. Consequently, such air machinery and tools employing the compressed air have often been out of order. Therefore, when supplied to such machinery and tools, the compressed air should be kept in a moisture free state as much as possible for the machinery and tools to be used for a long time without trouble.

At present, two kinds of moisture removers such as a filter exchange type and an air dryer are being used. The filter exchange type tends to be uneconomical and ineffective since an expensive filter should be exchanged periodically and the moisture is removed only at the rate of from 40 to 60%. It is also cumbersome to use the air dryer since chemicals consumed should be exchanged regularly.

JP-A-59147621 (Patent Abstracts of Japan, unexamined Applications, Section C, Volume 8, No 279, 20 December 1984; C50257) discloses dehumidifying apparatus for the removal of moisture from compressed air. In use, air is forced through a tapered pipe for adiabatic cooling, and the air thus cooled is then passed through a bank of glass tubes on which moisture condenses. The pipe extends substantially parallel to the direction of air flow through the glass tubes.

It is an object of the present invention to provide an improved moisture remover to avoid the above difficulties and then to use various air machinery and tools economically and effectively for a long time without trouble.

According to the present invention, there is provided a moisture remover for use in a compressed air system which comprises:
a cylindrical body (1) having a cylindrical tube (8) therein terminating above the bottom of said body (1) to leave a gap for air to pass into the interior space (12) between said body (1) and tube (8) and said body (1) being provided with a drain hole (3) for the removal of condensed moisture;
a cap (2) coupled to said cylindrical body (1), said cap (2) having compressed air inlet and outlet ports (4, 5), the inlet port (4) being in communication with the interior of said tube (8) via a plurality of tapered cooling holes (11, 11', 11'') through which air passing into said cylindrical tube (8) is adiabatically cooled and the outlet port (5) being in communication with the interior (12) of said cylindrical body (1); and
condensation means (9, 9', 9'') disposed in said tube (8) below said cooling holes (11, 11' 11''),
characterised in that a cooling chamber (7) of external diameter less than the internal diameter of the tube (8) extends coaxially into said tube (8) and is closed at its axially innermost end with respect to the tube (8), the inlet port (4) communicates with the axially outermost end of said cooling chamber (7) to supply air thereto and the cooling holes (11, 11', 11'') are located at the closed end of said cooling chamber (7) and extend substantially perpendicularly to the axis of said tube (8) to connect with the interior of said tube (8) in the narrow gap between the tube inside wall and the exterior of said cooling chamber (7) and in that said condensation means are filter nets (9, 9', 9'').

An embodiment of the invention is illustrated in the accompanying drawings, in which:

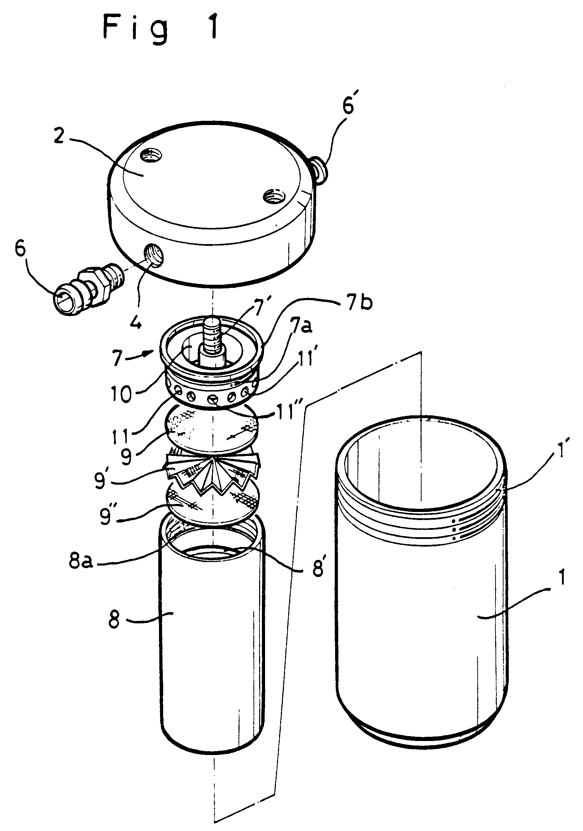

Figure 1 is an exploded perspective view of a water remover in accordance with the present invention.

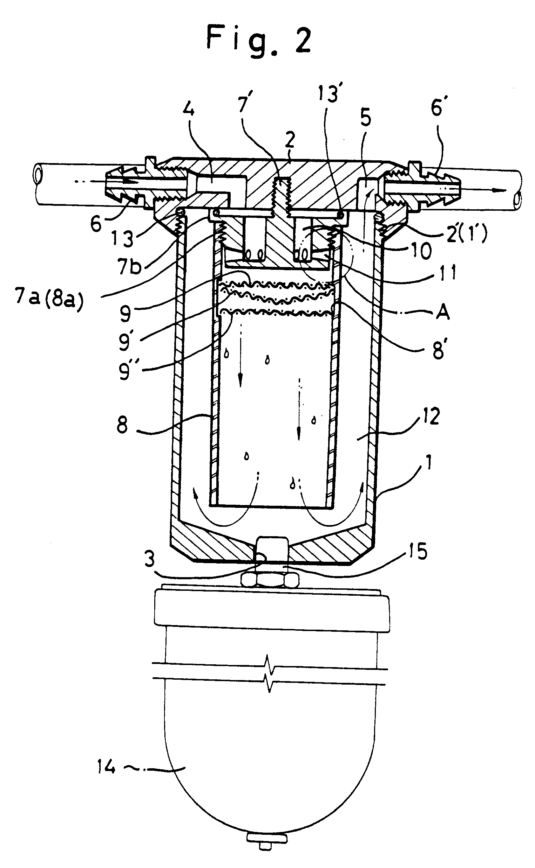

Figure 2 is a vertical sectional view of a water-remover in accordance with the present invention.

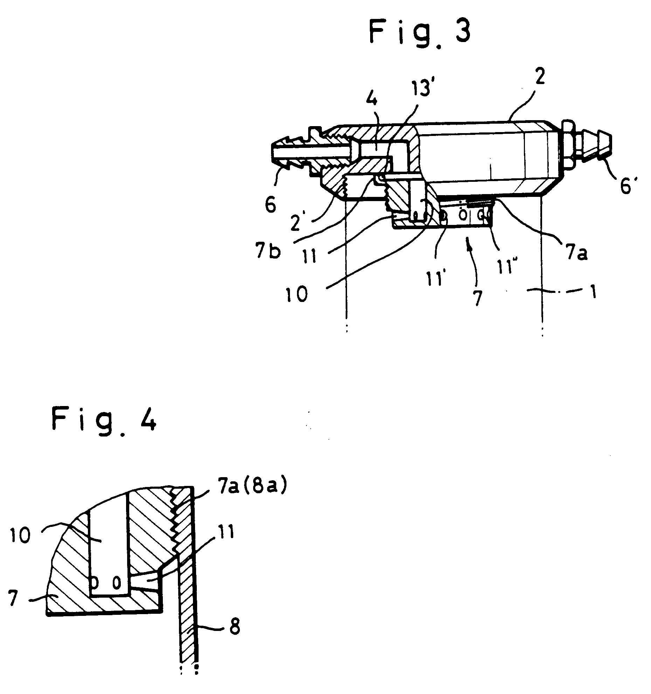

Figure 3 is a sectional view, partially broken for showing the construction of a cap and a cooling chamber.
Figure 4 is a sectional view of portion A in Figure 2 enlarged for clarity.

In the drawings, a cylindrical body 1 has a drain hole 3 formed centrally at the bottom thereof. An auto-drain 14 is coupled to the body 1 by a nipple 15. A screw 1' is formed around the outer periphery of the upper part of the body 1 and then is screwed to a screw 2' in the interior of a cap 2. Ports 4 and 5 having screw portions, which are employed to receive screw nipples 6 and 6', are formed on both sides of the cap 2.

The end of one port 4 is bent by 90⁰ so as to be coupled to the inner space 10 of a cooling chamber 7 and the end of the other port 5 is also bent by 90⁰ so as to communicate with the outer space 12 of a cylindrical tube 8. The cooling chamber 7 is secured to the cap 2 by screwing a bolt 7' on the upper part of the cooling chamber 7 to a screw hole formed centrally in the lower part of the interior of the cap 2.

The cooling chamber 7 has a space 10 on its upper part and has a closed bottom. Cooling holes 11, 11' and 11'' forming same sizes and shapes are bored through the periphery of the lower part of the cooling chamber 7. The cooling holes 11, 11' and 11'' are tapered holes so that the inlets are smaller than the outlets thereof. A screw 7a formed at the lower part of a hanger 7b, which is located on the upper part of the cooling chamber, 7 is screwed to a screw 8a which is located in the interior of the upper part of the cylindrical tube 8. Filter nets 9, 9' and 9'' are placed under the cooling chamber 7 in the interior of the tube 8. The lower-positioned net 9'' is hanging on a hanger 8' which is placed in the interior of the tube 8, the middle-positioned net 9' is spaced a predetermined distance from the net 9'' and the net 9 is placed over the net 9'. Numbers 13 and 13' denote packings.

The water remover constructed according to the present invention is to be installed in the center of the compressed air line by employing nipples 6 and 6' which are screwed into the ports 4 and 5. The compressed air produced from the compressor passes through the nipple 6 and the port 4 into the inner space of the cylindrical tube 8.

Since the inlets of the cooling holes 11, 11' and 11'' are narrow and the outlets thereof are wide, the pressure of the compressed air is high at the inlets and low at the outlets and thus the temperature drops suddenly at the outlets of the cooling holes by adiabatic expansion.

As an example, if the pressure of the compressed air produced from a compressor is 7kg/cm², the temperature of the compressed air passing through the moisture remover according to this invention is about 45⁰C, compared with 60⁰C when not passing through the remover in accordance with this invention.

The moisture in the compressed air drops into the inner space of the tube 8 through the holes and then is condensed when passing through the nets 9, 9' and 9''. The condensed dew drops downwardly into the bottom of the tube 8 and then into the auto-drain 14. The dew condensed on the inner wall of the tube 8 trickles into said auto-drain 14.

Furthermore, impurities such as oxidized oil, carbon and the like in the compressed air are filtered through the nets.

A user may continue use of the said remover only by eliminating the water in the auto-drain manually after usage for some time. Therefore, one can use air machinery and tools at a lower cost by employing the remover according to the present invention.

## Claims

1. A moisture remover for use in a compressed air system which comprises:
a cylindrical body (1) having a cylindrical tube (8) therein terminating above the bottom of said body (1) to leave a gap for air to pass into the interior space (12) between said body (1) and tube (8) and said body (1) being provided with a drain hole (3) for the removal of condensed moisture;
a cap (2) coupled to said cylindrical body (1), said cap (2) having compressed air inlet and outlet ports (4, 5), the inlet port (4) being in communication with the interior of said tube (8) via a plurality of tapered cooling holes (11, 11', 11'') through which air passing into said cylindrical tube (8) is adiabatically cooled and the outlet port (5) being in communication with the interior (12) of said cylindrical body (1); and
condensation means (9, 9', 9'') disposed in said tube (8) below said cooling holes (11, 11' 11''),
characterised in that a cooling chamber (7) of external diameter less than the internal diameter of the tube (8) extends coaxially into said tube (8) and is closed at its axially innermost end with respect to the tube (8), the inlet port (4) communicates with the axially outermost end of said cooling chamber (7) to supply air thereto and the cooling holes (11, 11', 11'') are located at the closed end of said cooling chamber (7) and extend substantially perpendicularly to the axis of said tube (8) to connect with the interior of said tube (8) in the narrow gap between the tube inside wall and the exterior of said cooling chamber (7) and in that said condensation means are filter nets (9, 9', 9'').

2. A moisture remover as claimed in Claim 1, wherein the filter nets are three in number placed one above the other in the tube (8).

3. A moisture remover as claimed in Claim 2, wherein the middle net (9') is convoluted in the circumferential direction and the upper and lower nets (9, 9'') are planar in said direction.

4. A moisture remover as claimed in any one of the preceding claims, wherein said cooling chamber (7) is annular in said axial direction.

5. A compressed air system incorporating a moisture remover as claimed in any one of the preceding claims.

## Patentansprüche

1. Entfeuchter zur Verwendung in einem Druckluftsystem, der aufweist:
einen zylindrischen Körper (1) mit einem zylindrischen Rohr (8), das über dem Boden des Körpers (1) endet, um eine Lücke zu lassen, damit Luft in den Innenraum (12) zwischen dem Körper (1) und dem Rohr (8) strömen kann, wobei der Körper (1) mit einem Abzugsloch (3) für die Entfernung der kondensierten Feuchtigkeit versehen ist;
eine mit dem zylindrischen Körper (1) gekoppelte Kappe (2) mit Drucklufteinlaß- und Druckluftauslaßöffnungen (4, 5), wobei die Einlaßöffnung (4) über eine Vielzahl von verjüngten Kühllöchern (11, 11', 11'') mit dem Inneren des Rohrs (8) in Verbindung steht, durch die in das zylindrische Rohr (8) strömende Luft adiabatisch gekühlt wird, und wobei die Auslaßöffnung (5) mit dem Inneren (12) des Zylindrischen Körpers (1) in Verbindung steht; sowie
Kondensationsmittel (9, 9', 9''), die in dem Rohr (8) unter den Kühllöchern (11, 11', 11'') angeordnet sind,
dadurch gekennzeichnet, daß sich eine Kühlkammer (7) mit einem kleineren Außendurchmesser als dem Innendurchmesser des Rohrs (8) koaxial in das Rohr (8) erstreckt und an seinem axial innersten Ende bezüglich des Rohrs (8) geschlossen ist, die Einlaßöffnung (4) mit dem axial äußersten Ende der Kühlkammer (7) in Verbindung steht, um ihr Luft zuzuführen, und sich die Kühllöcher (11, 11', 11'') an dem geschlossenen Ende der Kühlkammer (7) befinden und sich im wesentlichen senkrecht zu der Achse des Rohrs (8) erstrecken, um mit dem Inneren des Rohrs (8) in der engen Lücke zwischen der Rohrinnenwand und dem Äußeren der Kühlkammer (7) in Verbindung zu treten, und daß die Kondensationsmittel (9, 9', 9'') Filternetze sind.

2. Entfeuchter nach Anspruch 1, bei welchem die Anzahl der Filternetze drei ist und diese in dem Rohr (8) übereinander gesetzt sind.

3. Entfeuchter nach Anspruch 2, bei welchem das mittlere Netz (9') in Umfangsrichtung gefaltet ist und das obere und untere Netz (9, 9'') in dieser Richtung planar sind.

4. Entfeuchter nach einem der vorhergehenden Ansprüche, bei welchem die Kühlkammer (7) in der axialen Richtung ringförmig ist.

5. Druckluftsystem, das einen Entfeuchter nach einem der vorhergehenden Ansprüche umfaßt.

## Revendications

1. Dispositif d'élimination de l'humidité utilisable dans un système à air comprimé, comprenant:
un corps cylindrique (1) contenant un tube cylindrique (8) qui se termine au-dessus du fond dudit corps (1) de façon à ménager un intervalle pour que l'air puisse passer dans l'espace intérieur (12) entre ledit corps (1) et le tube (8), ledit corps (1) étant muni d'un trou de drainage (3) pour l'évacuation de l'humidité condensée;
un couvercle (2) accouplé audit corps cylindrique (1), ce couvercle (2) comportant des orifices d'admission et de sortie (4, 5) pour l'air comprimé, l'orifice d'admission (4) étant en communication avec l'intérieur dudit tube (8) par l'intermédiaire de plusieurs forures coniques de refroidissement (11, 11', 11'') par lesquelles l'air qui passe dans ledit tube cylindrique (8) est refroidi adiabatiquement, et l'orifice de sortie (5) étant en communication avec l'intérieur (12) dudit corps cylindrique (1); et
des moyens de condensation (9, 9', 9'') disposés dans ledit tube (8) au-dessous desdites forures de refroidissement (11, 11', 11''),
caractérisé en ce qu'une chambre de refroidissement (7), dont le diamètre extérieur est inférieur au diamètre intérieur du tube (8), s'étend coaxialement dans ledit tube (8) et est fermée à son extrémité interne en direction axiale par rapport au tube (8), l'orifice d'admission (4) communique avec l'extrémité externe en direction axiale de ladite chambre de refroidissement (7) de manière à alimenter celle-ci en air, et les forures de refroidissement (11, 11', 11'') sont situées à l'extrémité fermée de ladite chambre de refroidissement (7) et s'étendent en direction sensiblement perpendiculaire à l'axe dudit tube (8), de façon à déboucher à l'intérieur dudit tube (8) dans l'intervalle étroit entre la paroi interne du tube et la paroi extérieure de ladite chambre de refroidissement (7), et en ce que lesdits moyens de condensation sont des treillis de filtre (9, 9', 9'').

2. Dispositif d'élimination de l'humidité selon la revendication 1, dans lequel les treillis de filtre sont au nombre de trois et sont disposés l'un au-dessus de l'autre dans le tube (8).

3. Dispositif d'élimination de l'humidité selon la revendication 2, dans lequel le treillis du milieu (9') est ondulé dans la direction circonférentielle et les treillis supérieur et inférieur (9, 9'') sont plans dans cette direction.

4. Dispositif d'élimination de l'humidité selon l'une quelconque des revendications 1 à 3, dans lequel ladite chambre de refroidissement (7) est annulaire dans ladite direction axiale.

5. Système à air comprimé, contenant un dispositif d'élimination de l'humidité selon l'une quelconque des revendications 1 à 4.
